# EUROPEAN PATENT SPECIFICATION

(11) **EP 4 237 611 B1**
(45) Date of publication and mention of the grant of the patent: **20.11.2024**
(21) Application number: 21830814.6
(22) Date of filing: 21.12.2021
(51) Int. Cl.: D04H 1/58, D21H 17/06, D21H 17/14, D21H 17/22, D21H 17/24, D21H 17/26, D21H 17/00, D04H 1/587, D04H 1/64, D06M 13/238, D06M 15/03, D06M 15/11, D06M 15/15

(54) **BINDER COMPOSITIONS**
BINDEMITTELZUSAMMENSETZUNGEN
COMPOSITIONS DE LIANT

(30) Priority: 21.12.2020 SE 2051512
(43) Date of publication of application: 06.09.2023
(73) Proprietor: OrganoClick AB, 187 66 TÄBY (SE)
(72) Inventor: KISHANI, Saina, 170 67 Solna (SE); HASSANZADEH, Salman, 186 42 Vallentuna (SE)
(74) Representative: Bergenstråhle & Partners AB
(86) International application number: PCT/SE2021/051300
(87) International publication number: WO 2022/139670

(56) References cited:
- EP-A1- 1 382 642
- US-A1- 2011 003 522
- US-A1- 2020 131 679

## Description

### Technical field

The present invention generally relates to new biobased, biodegradable and compostable binder compositions comprising a water soluble biopolymer or protein hydrolysate, a saccharide component, and tannic acid.

### Background of the invention

Biobased polymer as binders to improve mechanical properties of fiber material are desirable to replace chemical binders from petroleum based sources such as ethylene vinyl acetate (EVA), polyvinyl alcohol (PVA), styrene-butadiene rubber (SBR) and acrylics. WO2018038671 discloses biobased binder compositions that are environmentally benign, renewable and biodegradable and induce improved strength on a wide range of fiber materials, such as paper, textiles and nonwoven materials. US2020131679A1 discloses a binder composition for impregnating a textile material such as mineral wool products. EP1382642 A1 discloses a formaldehyde-free aqueous binder composition particularly useful for bonding mineral fiber products. US2011003522 A1 discloses a binder composition that includes a protein-containing biomass and a pH adjuster. There is still a need to develop biobased binders that are adapted to non-cellulosic fiber materials. It is for example, in particular desirable to find a biobased and biodegradable binder for polyesters as well as cellulose based materials.

Polyesters (PES) are a category of polymers that contain an ester functional group in their main polymer chain. As a specific material, it most commonly refers to a type called polyethylene terephthalate (PET). Most synthetic polyesters are not biodegradable.

Polyester fibers are sometimes spun together and bonded using oil-based binders (most common SBR) to make them strong, wrinkle- and tear-resistant and to reduce shrinking. This creates a PES nonwoven or textile material. Fossil based binders are imposed and melted onto the fiber surface to create physical and chemical bonds in the fiber network and cause an increase in both dry and wet strengths properties of the nonwoven or paper. The synthetic binders used on PET nonwoven need to have proper wetting property to provide adequate impregnation and penetration of the binder into the PET fiber network.

### Description of the invention

An object of the present invention is to obtain biobased binder compositions that are useful in a wide range of substrate materials, including synthetic polyester type substrates and cellulose based substrates to induce an improvement in a strength parameter or a mechanical property for the substrate.

It is an object of the present invention to obtain biobased binder compositions that are possible to dry and cure in same temperatures as commercial synthetic binders but require shorter drying times for treated material compared to synthetic binders, such as an SBR binder.

It is further an object of the present invention to obtain biobased binder compositions that when used in an aqueous form exhibits viscosities comparable to conventional binder alternatives used in the industry. This enables the binder composition to be used in conventional equipment without needing any major modifications. For example, the binder composition should exhibit a viscosity comparable to a SBR-binder.

In a broader aspect, the invention relates to a composition, suitable as a binder for fiber based materials, textiles, woven and nonwoven materials, comprising a water soluble biobased polymer selected from a polysaccharide, preferably a polyelectrolyte polysaccharide, or a protein hydrolysate; a support agent selected from at least one in the group of saccharides and polyols; tannic acid; and a pH adjuster, providing a resulting aqueous composition with a pH that is less than 7. The support agent is one or more of polyols selected from glycerol, mannitol, maltitol, xylitol and sorbitol and saccharides selected from glucose, mannose, fructose, sucrose, sucralose, sucrose esters, cyclodextrin, hydrolysed starch, dextrin.

The binder composition can be in powder form or be in an aqueous form. When the binder composition is in powder form, the components of the binder composition are present in powder form. An aqueous binder composition according to the present invention is prepared by mixing the powder binder composition in water. The pH adjuster should therefore be present in such an amount that a resulting aqueous binder composition prepared from a powder binder composition exhibits a pH of less than 7 when diluted in water to a desired solid content and viscosity, before application to a substrate material. A substrate material is defined as a fiber based material, a textile, a woven or a nonwoven material.

In the broad aspect, the support agent in the composition increases the binder function and/or efficacy and may induce other characteristics to a substrate, such as stiffness or softness or controlled water absorption.

The water-soluble biobased polymer, the components of the protein hydrolysate, the support agent and the tannic acid have the capacity to act as a binder by interacting with the substrate, and improve important mechanical characteristics of the fiber based materials, textiles, woven and nonwoven materials acting as substrates.

Protein hydrolysates are complex mixtures of oligopeptides, peptides, and free amino acids which are produced by partial or extensive hydrolysis and may include both water soluble and insoluble components, while soluble such products frequently are termed peptones. Protein hydrolysates can be derived from many sources, such as collagen, keratin, elastin, milk, wheat, almond, silk, soy, peas and similar.

The support agent of the invention is one or more of a polyol selected from glycerol, mannitol, maltitol, xylitol and sorbitol and saccharides selected from glucose, mannose, fructose, sucrose, sucralose, sucrose esters, cyclodextrin, hydrolysed starch, dextrin and similar compounds.

In the context of the support agent, hydrolyzed starch is a product from chemical or enzymatic treatment of starch from various natural sources. The hydrolyzed starch can be hydrogenated and comprise a mixture of polyols, suitable brands for the present invention can be those with CAS No. 68425-17-2 and/or as No. 1259528-21-6 or the similar.

In embodiments of the composition, the biobased polymer is a polysaccharide, preferably a polyelectrolyte polysaccharide.

In one embodiment of the invention, the polysaccharide is chitosan, and the composition is an aqueous composition, comprising chitosan, cyclodextrin, tannic acid and at least one acid as a pH adjuster. Such a composition can comprise 1 to 20 % (wt) of chitosan; 1 to 30 % (wt) of cyclodextrin; 0.1 to 5 % (wt) of tannic acid; and 0.1 to 30 % (wt) of the pH adjuster. In one example of the composition, it comprises 0.005 to 10 % (wt) of chitosan; 5 to 15 % (wt) of cyclodextrin; 0.5 to 2 % (wt) of tannic acid; and 5 to 20% (wt) of the pH adjuster, preferably an acid and more preferably citric acid or a hydrate thereof. Preferably, the pH is less than 5, and more preferably the cyclodextrin is beta-cyclodextrin

In one embodiment of the invention, the composition comprises chitosan, hydrolyzed starch, tannic acid, optionally a salt and a pH adjuster. Such a composition can comprise 0.005 to 20 % (wt) of chitosan; 1 to 50 % (wt) of hydrolyzed starch; and 0.1 to 5 % (wt) of tannic acid; and 0.1 to 30 % of the pH adjuster. In one example of the composition, it comprises 1 to 5 % (wt) of chitosan; 10 to 40 % (wt) of hydrolyzed starch; 0.1 to 2 % (wt) of tannic acid; and 1 to 10 % (wt) of the pH adjuster, preferably an acid and more preferably lactic acid.

In embodiments, wherein the water-soluble polymer is chitosan, it preferably has a degree of deacetylation of 66-100 %.

In one embodiment of the invention, the polysaccharide is carboxymethyl cellulose (CMC) and the compositions comprise CMC, cyclodextrin, tannic acid and a pH adjuster. The composition can be in dry powder form or be an aqueous composition with a pH of less 5, comprising 0.1 to 20 % (wt) CMC; 1 to 20 % (wt) of the cyclodextrin, preferably beta-cyclodextrin; 0.1 to 5 % (wt) of tannic acid; and 1 to 20 % (wt) of the pH adjuster. In one example of the aqueous composition, it comprises 1 to 10 % (wt) CMC; 5 to 15 % (wt) of cyclodextrin, preferably beta-cyclodextrin; 0.1 to 5 % (wt) of tannic acid; and 5 to 20 % (wt) of the pH adjuster. Preferably, the pH adjuster comprises citric acid or hydrate thereof, and more preferably the pH adjuster is a combination of citric acid or hydrate thereof and a salt of citric acid or hydrate thereof.

In another embodiment, the inventive compositions comprise a protein hydrolysate, cyclodextrin, tannic acid and a pH adjuster. Such a composition can comprise 1 to 30 % (wt) of the protein hydrolysate; 1 to 30 % (wt) of the cyclodextrin, preferably beta-cyclodextrin; 0.1 to 5 % (wt) of tannic acid; and 1 to 20 % (wt) of the pH adjuster. In one example of the composition, it comprises 0.5 to 10 % (wt) of the protein hydrolysate; 5 to 15 % (wt) of cyclodextrin, preferably beta-cyclodextrin; 0.1 to 5 % (wt) of tannic acid; and 5 to 15 % (wt) of the pH adjuster. The protein hydrolysate in this embodiment can be pepton soy.

Generally, in disclosed embodiments of the composition the pH adjuster preferably is at least one acid or any hydrate or salt thereof. The acid can be selected from one or more of acetic acid, acetylsalicylic acid, adipic acid, benzenesulfonic acid, camphorsulfonic acid, citric acid, dihydroxy fumaric acid, formic acid, glycolic acid, glyoxylic acid, hydrochloric acid, lactic acid, malic acid, malonic acid, maleic acid, mandelic acid, oxalic acid, para-toluenesulfonic acid, phtalic acid, pyruvic acid, salicylic acid, sulfamic acid, sulfuric acid, tartaric acid, levulinic acid and succinic acid, preferably citric acid, lactic acid oxalic acid and tartaric acid, more preferably citric acid and/or lactic acid, and most preferably citric acid monohydrate.

Generally, according to embodiment of the disclosed aqueous binder compositions, it is preferred that they have a solid content of higher than 20 % (wt) and a viscosity of less than 500 mPas.

Optionally, the compositions according to all embodiments further can comprise at least one additive selected from a preservative, a salt, a wetting agent, a UV-protectant, a flame retardant, an antioxidant, a softener, a plasticizer, a defoamer, a foaming agent, a coalescent agent, a catalyst, a surfactant, an emulsifier, a conservative, a cross-linker, a wet-strength agent, rheology modifiers, fillers, nonionic polymers, dyes, and pigments.

When the compositions further comprise one or more preservatives it can be selected from one or more of fungicide, bactericide, pharmaceutical preservative, cosmetic preservative and food preservatives. The concentration of the preservative is 0.005-10 wt%, preferably 0.005 - 1.5wt%, more preferably 0.005-0.5 wt%. Moreover, the preservative is preferably biodegradable and/or renewable. Food preservatives, pharmaceutical preservatives and cosmetic preservatives are preferred since they are in general non-toxic. The food preservative can be selected from benzoic acid, sodium benzoate, hydroxybenzoate and derivatives thereof, lactic acid, propionic acid and sodium propionate, sulfur dioxide and sulfites, sorbic acid and sodium sorbate, potassium sorbate, ascorbic acid, sodium ascorbate, butylated hydroxytoluene, butylated hydroxyanisole, gallic acid and sodium gallate and tocopherols. A fungicide or bactericide such as 1,2-benzisothiazolin-3-one can be included in the compositions. Moreover, a cosmetic preservative such as 2-methyl-4-isothiazolin-3-one can either alone, or in combination with 1,2-benzisothiazolin-3-one be included in the compositions. Furthermore, a pharmaceutical preservative such as 2-Bromo-2-nitro-1,3-propanediol can either alone or in combination with either one of, or both of 1,2-benzisothiazolin-3-one and 2-methyl-4-isothiazolin-3-one be included in the compositions.

When the compositions additionally comprise an acid or basic catalyst, the catalyst can be chosen from Lewis bases and acids, such as clay based catalysts, colloidal or noncolloidal silica based catalyst, organic amines, quaternary amines, metal oxides, metal sulphates, metal chlorides, urea sulphates, urea chlorides and catalysts based on silicates. The catalyst can also be a phosphorus-comprising compound, for example an alkali metal hypophosphite salt, an alkali metal phosphite, an alkali metal polyphosphate, an alkali metal hydrogen phosphate, a phosphoric acid or an alkylphosphonic acid. Preferably, the alkali metal is sodium or potassium. The catalyst can also be a compound comprising fluorine and boron, for example tetrafluoroboric acid or a salt of this acid, in particular an alkali metal tetrafluoroborate, such as sodium tetrafluoroborate or potassium tetrafluoroborate, an alkaline earth metal tetrafluoroborate, such as calcium tetrafluoroborate or magnesium tetrafluoroborate, a zinc tetrafluoroborate and an ammonium tetrafluoroborate. Preferably, the catalyst is sodium hypophosphite, sodium phosphite and the mixtures of these compounds. The amount of catalyst introduced into the compositions can represent up to 20 wt%, preferably up to 10 wt%, and advantageously is at least equal to 1 wt%.

In another general aspect, the invention relates to methods of treating fiber based materials, textiles, woven and nonwoven materials with a binder composition, including any of the previously described compositions, comprising: applying the composition to a fiber based material, a textile, a woven or a nonwoven material; and curing the applied material at a temperature above ambient (room) temperature, but below 200 °C.

Generally, the invention also extends to a fiber based material, a textile, a woven or a nonwoven material obtainable with any method as disclosed and applied with any composition as disclosed. Thereby the material obtains an improved wet and/or dry tensile strength compared to a non-treated material.

In one embodiment, the applied composition is an aqueous composition, comprising chitosan, cyclodextrin, tannic acid and at least one acid as a pH adjuster. Such a composition can comprise 1 to 20 % (wt) of chitosan; 1 to 30 % (wt) of cyclodextrin; 0.1 to 5 % (wt) of tannic acid; and 0.1 to 30 % (wt) of the pH adjuster. Preferably, the pH is less than 5, and preferably the cyclodextrin is beta-cyclodextrin. In one example of the composition, it comprises 0.005 to 10 % (wt) of chitosan; 5 to 15 % (wt) of cyclodextrin; 0.5 to 2 % (wt) of tannic acid; and 5 to 20 % (wt) of the pH adjuster, preferably an acid and more preferably citric acid or a hydrate thereof.

In one embodiment, the applied compositions comprise CMC, cyclodextrin, tannic acid and a pH adjuster in an aqueous composition with a pH of less than 5, preferably comprising 0.1 to 20 % (wt) CMC; 1 to 20 % (wt) of cyclodextrin, preferably beta-cyclodextrin; 0.1 to 5 % (wt) of tannic acid; and 1 to 20 % (wt) of the pH adjuster. In one example of the aqueous composition, it comprises 1 to 10 % (wt) CMC; 5 to 15 % (wt) of cyclodextrin, preferably beta-cyclodextrin; 0.1 to 5 % (wt) of tannic acid; and 5 to 20 % (wt) of the pH adjuster. In one example, the pH adjuster preferably comprises citric acid or hydrate thereof and more preferably the pH adjuster is a combination of citric acid or hydrate thereof and a citric acid salt or hydrate thereof.

In one embodiment, the applied compositions comprise a protein hydrolysate, cyclodextrin, tannic acid and a pH adjuster. Such a composition can comprise 1 to 30 % (wt) of the protein hydrolysate; 1 to 30% (wt) of cyclodextrin, preferably beta-cyclodextrin; 0.1 to 5 % (wt) of tannic acid; and 1 to 20 % (wt) of the pH adjuster. In one example of the composition, it comprises 0.5 to 10 % (wt) of the protein hydrolysate; 5 to 15 % (wt) of cyclodextrin, preferably beta-cyclodextrin; 0.1 to 5 % (wt) of tannic acid; and 5 to 15 % (wt) of the pH adjuster. The protein hydrolysate in this embodiment can be pepton soy.

Generally, the present disclosure is directed to a cellulose based material, which in addition can comprise a synthetic fiber, preferably polyethylene terephthalate (PET), and treated with the previously described method with any binder composition as previously disclosed.

The applied composition comprises chitosan, hydrolyzed starch, tannic acid, optionally a salt, and a pH adjuster. Such a composition can comprise 0.005 to 20 % (wt) of chitosan; 1 to 50 % (wt) of hydrolyzed starch; and 0.1 to 5 % (wt) of tannic acid; and 0.1 to 30 % of the pH adjuster. In one example of the composition, it comprises 1 to 10 % (wt) of chitosan; 10 to 40 % (wt) of hydrolyzed starch; 0.1 to 2 % (wt) of tannic acid; and 1 to 10 % (wt) of the pH adjuster, preferably in the example an acid and more preferably lactic acid.

Suitable application methods for applying the binder composition to the fiber based material include spray coating, dip coating, roll coating, impregnation, padding, screen coating, printing, direct coating methods including knife coating, blade coating, wire wound bar coating, round bar coating and foam coating (e.g. crushed foam coating), and the like. Indirect coating methods including Mayer rod coating, direct roll coating, kiss coating, gravure coating and reverse roll coating, and the like; and ink jet and/or slit-die/slot-die.

The final fiber based materials obtained by the invention can be textiles, paper, paperboard, corrugated board, and nonwovens. The invention will in particular be useful for various nonwoven and specialty paper materials produced by different processes such as airlaid, wetlaid, spunbond, spunlace, wetlace, carded, meltblown and nonwovens made of combinations of these processes. Fibers in the materials can be both synthetic fibers such as PES, PET, PP, etc; man-made biobased fibers such as viscose, lyocell, PLA, etc; and natural fibers such as wood fibers (e.g. pulp), hemp, flex, jute, cotton and linen. The nonwovens or paper materials can used in, but are not limited to, applications such as hygiene applications such as baby diapers, feminine hygiene products, and adultery care products; table top products such as napkins or table cloths; filter materials; automotive nonwovens; tea bags and coffee filters; medical nonwovens used for face masks, surgical gowns and hair covers; food packaging materials; wipes and wet wipes; geotextiles; agricultural mulch films and fibermats for plants; insulations materials; interlining textiles; and materials for furniture.

### Detailed and exemplifying description of the invention

Below, all experimental chemicals, equipment and methods used in examples are described. All chemicals used for the present invention are described in Table A.

**Table A. Chemicals used for the present invention**

| Chemical |
|---|
| Citric acid monohydrate |
| Chitosan |
| Cyclodextrin |
| Tannic acid |
| Hydrolyzed starch |
| Lactic acid 80% |
| SBR binder |
| Biocide |
| Sodium carboxymethyl cellulose (CMC) |
| Protein |
| Sodium citrate |

### Equipment

All equipment used in the experiments are listed below.
- pH in formulations was measured with pH paper and pHenomenal pH1000H from VWR with Hamilton Polilyte Lab Temp BNC electrode (calibrated with buffers pH 4, 7 and 10).
- Tensile tests were conducted using Testometric M250-2.5AT (machine capacity 2.5 kN) together with Wintest Analysis software.
- Homogenization of formulations was done using IKA T25 digital Ultra-Turrax.
- Viscosity of formulations were measured with Brookfield DV-II+ Pro LV Viscometer together with Rheocal software using spindle LV64 at 200 rpm for concentrated formulations and LV61 at 30 rpm for diluted formulations.
- Coating of nonwoven was performed with Wichelhaus WI-MU 505 A horizontal padder.
- Drying of treated paper and nonwoven were done in Termaks oven with a stenter frame.

### Methods

In the following section, all methods referred to in the examples are described.
- Method A1: The formulation was prepared by properly dissolving the components in water.
- Method A2: The formulation was prepared by mixing all the components in powder form and adding the powder mix to the water in 3 steps while homogenizing.
- Method B: Dilution to 14-15 wt% of the binders were done before use. Coating of nonwovens was done with a horizontal padder using a pressure of 0.1 MPa and a speed of 11.5 together with drying with stenter frame in 150 degrees for two minutes. Three to six pieces for each test point were treated.
- Method C: Tensile testing of dry nonwoven was performed using Testometric M250-2.5AT (pretension: 0.01 N, sample length: 200 mm, width: 50 mm, speed: 100 mm/min, Load cell: 250 kgf) after having test specimens at least 20 h in 23 °C and 50 % RH . One to three pieces for each test point were treated. Three test specimens for each treated piece were cut out and tested.
- Method D: Tensile testing of wet nonwoven was performed using Finch cup mounted on Testometric M250-2.5AT (pretension: 0.01 N, sample length: 200 mm, width: 50 mm, speed: 100 mm/min, Load cell: 250 kgf) after having test specimens at least 20 h in 23 °C and 50 % RH followed by soaking the nonwoven in water for 15 seconds. Three test specimens for each treated piece were cut out and tested.

### Materials

In Table B, all materials used in the tests are described.

**Table B. Nonwoven material used in the experimental section**

| Name in the experimental section | Description | Gsm (g/m2) |
|---|---|---|
| PES | Hydroentangled 100% polyester nonwoven | 40 |
| Wetlaid | Wetlaid nonwoven based on 100% cellulose | 50 |
| ATB1 | Air trough bonded 100% polyester nonwoven | 41 |
| ATB2 | Air trough bonded 100% polyester nonwoven | 42 |
| Airlaid 1 | Airlaid nonwoven based on 100% fluff pulp with one side bonded with EVA (ethylene vinyl acetate) | 51.6 |
| Airlaid 2 | Airlaid nonwoven based on 100% fluff pulp with one side bonded with EVA (ethylene vinyl acetate) | 50.4 |

### Experiments

The experimental section describes the tests and conclusions of the results.

### Experiment 1. Addition of cyclodextrin as a component in binder

A model binder composition was created to be able to evaluate the cyclodextrin as a as support agent in binder compositions. The model binder was created with chitosan as the polymer source. The binder was prepared according to Method A.

| Formulation 1 | |
|---|---|
| RAW MATERIAL | Amount (%) |
| Chitosan | 2 |
| Citric acid mono hydrate | 15 |
| Cyclodextrin | 5.95 |
| Water | 76.96 |
| Acticid AB6 | 0.09 |
| Sum | 100 |

PES nonwovens were treated according to Method B and the mechanical properties were tested according to Method C. The table below shows the mechanical properties in cross direction (CD) measured for the PES substrates treated with a commercial SBR binder and Formulation 1.

| | Viscosity concentrated binder (mPas) | CD Force (kgf/50mm*10) | CD Strain (%) | Grammage (g/cm3) |
|---|---|---|---|---|
| PES (Ref) | - | 16.4 | 64.8 | 40.0 |
| SBR binder | 5 | 32.4 | 92. | 53.6 |
| Formulation 1 | 489 | 16.1 | 150.9 | 57.3 |

### Experiment 2. Addition of tannic acid to the binder composition

In the example below, addition of tannic acid to the binder formulation has been tested and mechanical properties evaluated in comparison with formulation1. The binder was prepared according to Method A.

| Formulation 2 | |
|---|---|
| RAW MATERIAL | Amount (%) |
| Chitosan | 1.5 |
| Citric acid mono hydrate | 11.25 |
| Cyclodextrin | 9 |
| Water | 77.16 |
| Acticid AB6 | 0.09 |
| Tannic acid | 1 |
| Sum | 100 |

Nonwoven was treated according to Method B and the mechanical properties were tested according to Method C. The table below shows the mechanical properties measured in CD for the PES substrate treated with a commercial SBR binder, the model formulation and the composition with tannic acid.

| | Viscosity concentrated binder (mPas) | CD Force (kgf/50mm*10) | CD Strain (%) | Grammage (g/cm3) |
|---|---|---|---|---|
| PES (Ref) | - | 16.4 | 64.8 | 40.0 |
| SBR binder | 5 | 32.4 | 92.9 | 53.6 |
| Formulation 1 | 489 | 16.1 | 150.9 | 57.3 |
| Formulation 2 | 488 | 27.1 | 112.7 | 53.3 |

The addition of tannic acid together with a slight increase in cyclodextrin resulted in an equally strong material as the SBR bonded material. Also, the substrate was stiffer.

### Experiment 3. Investigation of different addition levels of cyclodextrin

Formulations were prepared according to Method A with various amounts of beta cyclodextrin. PES substrates were treated according to Method B and tested in CD according to Method C.

| | Viscosity concentrated binder (mPas) | Solid content concentrated binder (wt%) | CD Force (kgf/50mm*10) | CD Strain (%) | Grammage (g/cm3) |
|---|---|---|---|---|---|
| PES (Ref) | - | - | 16.4 | 64.8 | 40.0 |
| SBR binder | 5 | 50 | 32.4 | 92.9 | 53.6 |
| Formulation 2 (9% cyclodextrin) | 488 | 20 | 27.1 | 112.7 | 53.3 |
| Formulation 2 (10% cyclodextrin) | 558 | 21 | 26.2 | 89.2 | 49.3 |
| Formulation 2 (12% cyclodextrin) | 576 | 23 | 24.8 | 87.5 | 55.2 |

Increasing the cyclodextrin in the recipe resulted in an increase in the solid content (which is preferred) and an increase of the stiffness of the PES nonwoven whilst the viscosity and mechanical properties were almost similar for all recipes.

### Experiment 4. Application to another PES nonwoven

The formulations from Example 4 were also tested on the air-through bonded PET nonwoven. The material was treated according to Method B and tested in the machine direction (MD) according to Method C and Method D.

| | Dry properties | | | Wet properties | | |
|---|---|---|---|---|---|---|
| | Grammage (g/cm3) | MD Dry Force (kgf/50mm*10) | MD Dry Strain (%) | Grammage (g/cm3) | MD Wet Force (kgf/50mm*10) | MD Wet Strain (%) |
| ATB1 (Ref) | 41.3 | 19.7 | 21.4 | - | - | - |
| SBR binder | 52.8 | 28.4 | 32.4 | 52.5 | 6.6 | 6.4 |
| Formulation 2 (9% cyclodextrin) | 53.3 | 26.9 | 30.1 | 48.0 | 5.0 | 14.8 |
| Formulation 2 (10% cyclodextrin) | 54.1 | 27.0 | 31.8 | 53.1 | 5.1 | 13.8 |
| Formulation 2 (12% cyclodextrin) | 53.3 | 26.7 | 31.2 | 52.8 | 5.1 | 14.7 |

### Experiment 5. Carboxymethyl cellulose (CMC) as source of polymer

In the following example, chitosan was substituted with CMC in the binder composition. The formulation was prepared according to Method A.

| Formulation 3 | Amount (%) |
|---|---|
| CMC | 2 |
| Citric acid mono hydrate | 11.25 |
| Cyclodextrin | 9 |
| Water | 76.66 |
| Acticide AB6 | 0.09 |
| Tannic acid | 1 |
| SUM | 100 |

The viscosity at 20 % solid content was around 5 mPas (LV64, 200 rpm) which is a preferred value. The formulation was tested on two different substrates, PES and ATB 2. The material was treated according to Method B and tested in CD for PES and MD for ATB 2 according to Method C. The results are showed in the table below.

### Test on ATB 2:

| | Viscosity concentrated binder (mPas) | Viscosity at dilution to 14 % (mPas) | MD Force (kgf/50mm*10) | MD Strain (%) | Grammage (g/cm3) |
|---|---|---|---|---|---|
| Ref ATB 2 (Ref) | | | 31.75 | 21.83 | 42.4 |
| SBR binder | 5 | 1 | 47.45 | 32.38 | 53.33 |
| Formulation 3 | 5 | 1 | 51.89 | 31.48 | 61.07 |
| Formulation 3 powder mix | 3 | 1 | 50.53 | 28.98 | 61.87 |

### Test on PES:

| | Viscosity concentrated binder (mPas) | Viscosity at dilution to 14 % (mPas) | CD Force (kgf/50mm*10) | CD Strain (%) | Grammage (g/cm3) |
|---|---|---|---|---|---|
| PES (Ref) | - | - | 16.4 | 64.8 | 40 |
| SBR binder | 5 | 1 | 32.4 | 92.9 | 53.6 |
| Formulation 2 | 488 | 80 | 27.1 | 112.7 | 53.3 |
| Formulation 3 | 5 | 1 | 24.1 | 90.03 | 54.7 |
| Formulation 3 powder mix | 3 | 1 | 23.03 | 84.89 | 51.2 |

The results obtained from ATB substrate shows even better force and almost similar strain properties of for the biobased binder in comparison with commercial SBR binder. For PES nonwoven, the strain is identical for the biobased binder and the commercial SBR binder.

### Experiment 6. Protein/hydrolyzed protein instead of carbohydrates

A hydrolyzed protein was used instead of chitosan to see if other components than carbohydrates could be used in the binder containing cyclodextrin. The formulation was prepared according to Method A.

| Formulation 4 | Amount (%) |
|---|---|
| Pepton soy | 1.5 |
| Citric acid mono hydrate | 11.25 |
| Cyclodextrin | 9 |
| Water | 77.16 |
| Acticid AB6 | 0.09 |
| Tannic acid | 1 |
| Sum | 100 |

Formulation 4 had water-like viscosity at 20% solid content and was tested on PES substrate. The material was treated according to Method B and tested in CD according to Method C. The results are shown in the tables below.

| | Viscosity concentrated binder (mPas) | Viscosity at dilution to 14 % (mPas) | CD Force (kgf/50mm*10) | CD Strain (%) | Grammage (g/cm3) |
|---|---|---|---|---|---|
| PES (Ref) | - | - | 16.4 | 64.8 | 40 |
| SBR binder | 5 | 1 | 32.4 | 92.9 | 53.6 |
| Formulation 2 | 488 | 80 | 27.1 | 112.7 | 53.3 |
| Formulation 4 | 5 | 1 | 22.0 | 150.5 | 48.8 |

The results show that the force and strain of the reference were both increased using protein in the formulation.

### Experiment 7. Adjusting pH

pH is a crucial parameter of a binder and can limit the use of binders to certain applications. A neutral, or close to neutral, binder will not face application limitations. To be able to use the binder in all kinds of processes and material, pH was increased combining citric acid sodium salt and citric acid, going towards a more neutral region. The formulation was prepared according to Method A2.

| Formulation 5 | Amount (%) |
|---|---|
| CMC | 4 |
| Citric acid mono hydrate | 2 |
| Citric acid sodium salt mono hydrate | 9.25 |
| Cyclodextrin | 9 |
| Water | 74.66 |
| Acticid AB6 | 0.09 |
| Tannic acid | 1 |
| Sum | 100 |

pH of the Formulation 5 became around 4-4.5. ATB and cellulosic wetlaid nonwoven were treated according to Method B and tested in according to Method C. The results are shown in the tables below.

### Test on ATB:

| | Viscosity concentrated binder (mPas) | Viscosity at dilution to 14 % (mPas) | MD Force (kgf/50mm*10) | MD Strain (%) | Grammage (g/cm3) |
|---|---|---|---|---|---|
| ATB 2 (Ref) | | | 31.75 | 21.83 | 42.4 |
| SBR | 5 | 1 | 47.45 | 32.38 | 53.33 |
| Formulation 5 | 220 | 21 | 41.62 | 22.75 | 55.47 |

### Test on wetlaid nonwoven:

| | Viscosity concentrated binder (mPas) | Viscosity at dilution to 14% (mPas) | MD Force (kgf/50mm*10) | MD Strain (%) | Grammage (g/cm3) |
|---|---|---|---|---|---|
| Wetlaid nonwoven (Ref) | - | - | 3.35 | 3.18 | 58.93 |
| Formulation 3 | 5.00 | 1.00 | 7.46 | 2.17 | 72.00 |
| Formulation 3 Powder mix | 3.00 | 1.00 | 6.47 | 2.22 | 70.93 |
| Formulation 5 | 220.00 | 21.00 | 9.92 | 1.87 | 71.73 |

The result from the ATB substrate treated with Formulation 5 shows that strength is very similar to the synthetic SBR binder. The result from the cellulose-based substrate treated with Formulation 5 shows a remarkable increase in the force.

### Experiment 8. Using another source of saccharide

Hydrolysed starch was now tested as the short saccharide. Another model formulation was created using lactic acid for dissolving the chitosan. The formulation was prepared according to Method A.

| Formulation 6 | Amount (%) |
|---|---|
| Water | 60.34 |
| Hydrolyzed starch | 35.4 |
| Chitosan | 2.2 |
| Lactic acid 80% | 1.4 |
| Acticide AB6 | 0.09 |
| NaCl | 0.3 |
| Sum | 100 |

To Formulation 6, tannic acid was added:

| Formulation 6 + 0.3 % TA | Amount (%) |
|---|---|
| Water | 60.31 |
| Hydrolyzed starch | 35.4 |
| Chitosan | 2.2 |
| Lactic acid 80% | 1.4 |
| Acticide AB6 | 0.09 |
| NaCl | 0.3 |
| Tannic acid | 0.3 |
| Sum | 100 |

pH of Formulation 6 + 0.3 % TA was around 5. Cellulosic airlaid nonwoven was treated according to Method B and tested in MD according to Method C.

| | Viscosity concentrated binder (mPas) | Viscosity at dilution to 14 % (mPas) | MD Force (kgf/50mm) | MD Strain (%) | Grammage (g/cm3) |
|---|---|---|---|---|---|
| Airlaid 1 (Ref) | - | - | 0.38 | 5.2 | 51.6 |
| Formulation 6 | 3300 | 171 | 5.2 | 5.8 | 60.0 |
| Formulation 6 + 0.3 % TA | 1961 | 96 | 6.1 | 6.1 | 60.0 |

The combination of chitosan, hydrolysed starch and lactic acid obtained higher strength by the addition of tannic acid and the viscosity was decreased with the addition of tannic acid.

Further, it was investigated if the amount of chitosan could be lowered while the amount of tannic acid was increased. For this, the tannic acid and chitosan amount was slightly changed in Formulation 6, creating Formulation 7.

| Formulation 7 | Amount (%) |
|---|---|
| Water | 60.91 |
| Hydrolyzed starch | 35.4 |
| Chitosan | 2.1 |
| Lactic acid 80% | 1.4 |
| Acticide AB6 | 0.09 |
| NaCl | 0.3 |
| Sum | 100 |

| Formulation 7 + 0.5 % TA | Amount (%) |
|---|---|
| Water | 60.41 |
| Hydrolyzed starch | 35.4 |
| Chitosan | 2.1 |
| Lactic acid 80% | 1.4 |
| Acticide AB6 | 0.09 |
| NaCl | 0.3 |
| Tannic acid | 0.5 |
| Sum | 100 |

Airlaid material was treated according to Method B and dry properties were tested in MD according to Method C.

| | Viscosity for concentrated binder (mPas) | Viscosity at dilution to 14% (mPas) | Grammage (g/cm3) | MD Dry Force (kgf/50mm) | MD Dry Strain (%) |
|---|---|---|---|---|---|
| Airlaid 1 (Ref) | - | - | 51.6 | 0.38 | 5.2 |
| Formulation 7 | 1319 | 77 | 58.5 | 4.5 | 5.8 |
| Formulation 7 + 0.5 % TA | 1535 | 90 | 58.7 | 5.5 | 5.5 |

Wet properties were tested in MD according to Method D.

| | Viscosity for concentrated binder (mPas) | Viscosity at dilution to 14% (mPas) | Grammage (g/cm3) | MD Wet Force (kgf/50mm) | MD Wet Strain (%) |
|---|---|---|---|---|---|
| Airlaid 1 (Ref) | - | - | - | - | - |
| Formulation 7 | 1319 | 77 | 59.0 | 2.6 | 2.8 |
| Formulation 7 + 0.5 % TA | 1535 | 90 | 60.4 | 3.2 | 2.6 |

The mechanical tests results show that the addition of 0,5 wt% tannic acid to Formulation 7 led to increased dry and wet strength of the treated nonwoven.

### Experiment 9. Decreasing water absorption

In addition to the increased mechanical properties in Experiment 9 with decreased Chitosan and increased TA, the hydrophobicity was much more pronounced in the substrate treated with 0.5 wt% TA. This was observed during the wet tensile test where the specimen were immersed for 15 sec in a Finch cup prior the wet tensile strength. With no tannic acid, the water was absorbed and readily transported through the material. With tannic acid, the water didn't pass the water surface. This makes the binder suitable for areas where absorption should be limited but not lost completely.

### Experiment 10. Additional acid

In order to further improve the mechanical properties of the binder, small addition of another acid to the composition was tested. In the examples below, 0.3 wt% citric acid (CA) was added to the tannic acid solution before it was added to Formulation 6 + 0,3% TA. This formulation is called Formulation 6 + 0.3 % TA + 0.3% CA in the tables below. Cellulosic airlaid material was treated according to Method B and dry properties were tested in MD according to Method C.

| | Viscosity concentrated | Viscosity at | Grammage | Dry Force | Dry |
|---|---|---|---|---|---|
| | binder (mPas) | dilution to 14% (mPas) | (g/cm3) | (kgf/50mm) | Strain (%) |
| Airlaid 2 (Ref) | - | - | 50.4 | 0.4 | 5.0 |
| Formulation 6 + 0.3 % TA | 1668 | 81 | 60.62 | 5.6 | 5.6 |
| Formulation 6 + 0.3 % TA + 0.3% CA | 1092 | 58 | 60.35 | 5.7 | 5.9 |

Wet properties were tested in MD according to Method D.

| | Viscosity concentrated binder (mPas) | Viscosity at dilution to 14% (mPas) | Grammage (g/cm3) | Wet Force (kgf/50mm) | Wet Strain (%) |
|---|---|---|---|---|---|
| Airlaid 2 (Ref) | - | - | - | - | - |
| Formulation 6 + 0.3 % TA | 1668 | 81 | 60.53 | 3.2 | 2.6 |
| Formulation 6 + 0.3 % TA + 0.3% CA | 1092 | 58 | 58.4 | 4.0 | 3.1 |

Addition of small amount of citric acid increase the mechanical properties, especially the wet strength, while keeping the pH not lower than 4.

### Experiment 11: Investigation of curing time

The settings for the curing time and temperature were similar for all the test with the synthetic SBR binder and biobased binders. However, the time was not enough to cure the SBR binder on ATB substrates since the material was still wet when the time was up. In all the performed tests with the SBR binder as a reference, the length of drying and curing times were almost double compared to the biobased binder formulations. Such an observation indicates that the biobased binder formulations cure much faster compared to the synthetic SBR binder which is advantageous in a real process environment.

## Claims

1. A composition suitable as a binder for fiber-based materials, paper, textiles, woven and nonwoven materials, comprising:
- a water soluble biobased polymer selected from a polysaccharide, preferably a polyelectrolyte polysaccharide, or a protein hydrolysate;
- a support agent selected from at least one in the group of saccharides and polyols;
- tannic acid;
- a pH adjuster, providing a resulting aqueous composition with a pH of less than 7 and;
wherein the support agent is one or more of polyols selected from glycerol, mannitol, maltitol, xylitol and sorbitol and saccharides selected from glucose, mannose, fructose, sucrose, sucralose, sucrose esters, cyclodextrin, hydrolysed starch, dextrin.

2. The composition according to claim 1, comprising chitosan, a cyclodextrin, tannic acid and at least one acid as a pH adjuster, wherein the composition is an aqueous composition.

3. The composition according to claim 2, comprising
- 0.005 to 20% (wt) of chitosan;
- 1 to 30% (wt) of the cyclodextrin;
- 0.1 to 5% (wt) of tannic acid; and
- 0.1 to 30% (wt) of the pH adjuster

4. The composition according to claim 1, comprising chitosan, hydrolyzed starch, tannic acid, optionally a salt and a pH adjuster.

5. The composition according to claim 4, comprising
- 0.005 to 20% (wt) of chitosan;
- 1 to 50% (wt) of hydrolyzed starch;
- 0.1 to 5% (wt) of tannic acid; and
- 0.1 to 30% of the pH adjuster

6. The composition according to claim 1, wherein the polysaccharide is carboxymethyl cellulose (CMC).

7. The composition according to claim 6, comprising CMC, a cyclodextrin, tannic acid and a pH adjuster.

8. The composition according to claim 7, wherein the composition is an aqueous composition with a pH of less 5, comprising
- 0.1 to 20% (wt) CMC;
- 1 to 20% (wt) of the cyclodextrin, preferably beta-cyclodextrin;
- 0.1 to 5% (wt) of tannic acid; and
- 1 to 20% (wt) of the pH adjuster.

9. A composition according to claim 1, comprising a protein hydrolysate, a cyclodextrin, tannic acid and a pH adjuster.

10. The composition according to claim 9, comprising
- 1 to 30% (wt) of the protein hydrolysate;
- 1 to 30% (wt) of the cyclodextrin, preferably beta-cyclodextrin;
- 0.1 to 5% (wt) of tannic acid; and
- 1 to 20% (wt) of the pH adjuster.

11. The composition according to claim 10, wherein the protein hydrolysate is pepton soy.

12. The composition according to any one the previous claims, wherein the composition is an aqueous composition having a solid content of at least 20% (wt) and viscosity of less than 500 mPas.

13. A method of treating fiber based materials, paper, textiles, woven and nonwoven materials with a composition according to claims 1 to 12 as a binder, comprising:
(a) applying the composition to a fiber based material, a paper, a textile, a woven or a nonwoven material;
(b) curing the applied material at a temperature above ambient (room) temperature, but below 200 °C.

14. A fiber based material, a textile, a woven or a nonwoven material obtainable with a method according to claim 13 with a composition according to any one of claims 1 to 12, thereby providing the material with improved wet and/or dry tensile strength compared to a non-applied material.

## Patentansprüche

1. Zusammensetzung, die als ein Bindemittel für faserbasierte Materialien, Papier, Textilien, gewebte und nicht gewebte Materialien geeignet ist, umfassend:
- ein wasserlösliches biobasiertes Polymer, ausgewählt aus einem Polysaccharid, vorzugsweise einem Polyelektrolyt-Polysaccharid, oder einem Proteinhydrolysat;
- ein Trägermittel, ausgewählt aus mindestens einem aus der Gruppe der Saccharide und Polyole;
- Gerbsäure;
- einen pH-Regler, der eine resultierende wässrige Zusammensetzung mit einem pH-Wert von weniger als 7 bereitstellt, und;
wobei das Trägermittel eines oder mehrere von Polyolen, ausgewählt aus Glycerin, Mannitol, Maltitol, Xylitol und Sorbitol, und Sacchariden, ausgewählt aus Glucose, Mannose, Fructose, Saccharose, Sucralose, Saccharoseestern, Cyclodextrin, hydrolysierter Stärke, Dextrin, ist.

2. Zusammensetzung nach Anspruch 1, die Chitosan, ein Cyclodextrin, Gerbsäure und mindestens eine Säure als einen pH-Regler umfasst, wobei die Zusammensetzung eine wässrige Zusammensetzung ist.

3. Zusammensetzung nach Anspruch 2, umfassend
- 0,005 bis 20% (Gew.) Chitosan;
- 1 bis 30% (Gew.) des Cyclodextrins;
- 0,1 bis 5% (Gew.) Gerbsäure; und
- 0,1 bis 30% (Gew.) des pH-Reglers

4. Zusammensetzung nach Anspruch 1, die Chitosan, hydrolysierte Stärke, Gerbsäure, optional ein Salz und einen pH-Regler umfasst.

5. Zusammensetzung nach Anspruch 4, umfassend
- 0,005 bis 20% (Gew.) Chitosan;
- 1 bis 50% (Gew.) hydrolysierte Stärke;
- 0,1 bis 5% (Gew.) Gerbsäure; und
- 0,1 bis 30% des pH-Reglers

6. Zusammensetzung nach Anspruch 1, wobei das Polysaccharid Carboxymethylcellulose (CMC) ist.

7. Zusammensetzung nach Anspruch 6, die CMC, ein Cyclodextrin, Gerbsäure und einen pH-Regler umfasst.

8. Zusammensetzung nach Anspruch 7, wobei die Zusammensetzung eine wässrige Zusammensetzung mit einem pH-Wert von weniger als 5 ist, umfassend
- 0,1 bis 20% (Gew.) CMC;
- 1 bis 20% (Gew.) des Cyclodextrins, vorzugsweise Beta-Cyclodextrins;
- 0,1 bis 5% (Gew.) Gerbsäure; und
- 1 bis 20% (Gew.) des pH-Reglers.

9. Zusammensetzung nach Anspruch 1, die ein Proteinhydrolysat, ein Cyclodextrin, Gerbsäure und einen pH-Regler umfasst.

10. Zusammensetzung nach Anspruch 9, umfassend
- 1 bis 30% (Gew.) des Proteinhydrolysats;
- 1 bis 30% (Gew.) des Cyclodextrins, vorzugsweise Beta-Cyclodextrins;
- 0,1 bis 5% (Gew.) Gerbsäure; und
- 1 bis 20% (Gew.) des pH-Reglers.

11. Zusammensetzung nach Anspruch 10, wobei das Proteinhydrolysat Pepton-Soja ist.

12. Zusammensetzung nach einem der vorstehenden Ansprüche, wobei die Zusammensetzung eine wässrige Zusammensetzung ist, die einen Feststoffgehalt von mindestens 20% (Gew.) und eine Viskosität von weniger als 500 mPas aufweist.

13. Verfahren zum Behandeln von faserbasierten Materialien, Papier, Textilien, gewebten und nicht gewebten Materialien mit einer Zusammensetzung nach den Ansprüchen 1 bis 12 als ein Bindemittel, umfassend:
(a) Auftragen der Zusammensetzung auf ein faserbasiertes Material, ein Papier, ein Textil, ein gewebtes oder ein nicht gewebtes Material;
(b) Aushärten des aufgetragenen Materials bei einer Temperatur über der Umgebungstemperatur (Raumtemperatur), jedoch unter 200°C.

14. Faserbasiertes Material, Textil, gewebtes oder nicht gewebtes Material, erhältlich mit einem Verfahren nach Anspruch 13 mit einer Zusammensetzung nach einem der Ansprüche 1 bis 12, wodurch das Material mit verbesserter Nass- und/oder Trockenzugfestigkeit im Vergleich zu einem nicht aufgetragenen Material bereitgestellt wird.

## Revendications

1. Composition appropriée en tant que liant pour matériaux à base de fibres, papier, textiles, matériaux tissés et non tissés, comprenant :
- un polymère biosourcé hydrosoluble choisi parmi un polysaccharide, de préférence un polysaccharide polyélectrolyte, ou un hydrolysat de protéines ;
- un agent de support choisi parmi au moins un élément du groupe des saccharides et des polyols ;
- un acide tannique ;
- un régulateur de pH, fournissant une composition aqueuse résultante avec un pH inférieur à 7 ; et
dans laquelle l'agent de support est un ou plusieurs des polyols choisis parmi le glycérol, le mannitol, le maltitol, le xylitol et le sorbitol et des saccharides choisis parmi le glucose, le mannose, le fructose, le saccharose, le sucralose, les esters de saccharose, la cyclodextrine, l'amidon hydrolysé, la dextrine.

2. Composition selon la revendication 1, comprenant du chitosane, une cyclodextrine, de l'acide tannique et au moins un acide en tant que régulateur de pH, dans laquelle la composition est une composition aqueuse.

3. Composition selon la revendication 2, comprenant
- 0,005 à 20 % (en poids) de chitosane ;
- 1 à 30 % (en poids) de cyclodextrine ;
- 0,1 à 5 % (en poids) d'acide tannique ; et
- 0,1 à 30 % (en poids) du régulateur de pH.

4. Composition selon la revendication 1, comprenant du chitosane, de l'amidon hydrolysé, de l'acide tannique, éventuellement un sel et un régulateur de pH.

5. Composition selon la revendication 4, comprenant
- 0,005 à 20 % (en poids) de chitosane ;
- 1 à 50 % (en poids) d'amidon hydrolysé ;
- 0,1 à 5 % (en poids) d'acide tannique ; et
- 0,1 à 30 % du régulateur de pH.

6. Composition selon la revendication 1, dans laquelle le polysaccharide est la carboxyméthylcellulose (CMC).

7. Composition selon la revendication 6, comprenant de la CMC, une cyclodextrine, de l'acide tannique et un régulateur de pH.

8. Composition selon la revendication 7, dans laquelle la composition est une composition aqueuse avec un pH inférieur à 5, comprenant
- 0,1 à 20 % (en poids) de CMC ;
- 1 à 20 % (en poids) de la cyclodextrine, de préférence de bêta-cyclodextrine ;
- 0,1 à 5 % (en poids) d'acide tannique ; et
- 1 à 20 % (en poids) du régulateur de pH.

9. Composition selon la revendication 1, comprenant un hydrolysat de protéines, une cyclodextrine, de l'acide tannique et un régulateur de pH.

10. Composition selon la revendication 9, comprenant
- 1 à 30 % (en poids) de l'hydrolysat de protéines ;
- 1 à 30 % (en poids) de la cyclodextrine, de préférence de bêta-cyclodextrine ;
- 0,1 à 5 % (en poids) d'acide tannique ; et
- 1 à 20 % (en poids) du régulateur de pH.

11. Composition selon la revendication 10, dans laquelle l'hydrolysat de protéines est du soja peptoné.

12. Composition selon l'une quelconque des revendications précédentes, dans laquelle la composition est une composition aqueuse présentant une teneur en solides d'au moins 20 % (en poids) et une viscosité inférieure à 500 mPas.

13. Procédé de traitement de matériaux à base de fibres, de papier, de textiles, de matériaux tissés et non tissés avec une composition selon les revendications 1 à 12 en tant que liant, comprenant :
(a) l'application de la composition sur un matériau à base de fibres, un papier, un textile, un matériau tissé ou non tissé ;
(b) le durcissement du matériau appliqué à une température supérieure à la température ambiante (pièce), mais inférieure à 200 °C.

14. Matériau à base de fibres, textile, matériau tissé ou non tissé pouvant être obtenu par un procédé selon la revendication 13 avec une composition selon l'une quelconque des revendications 1 à 12, ce qui confère au matériau une résistance à la traction humide et/ou à sec améliorée par rapport à un matériau sans application.
